(19) Europäisches Patentamt / European Patent Office / Office européen des brevets

(11) **EP 4 717 739 A1**

(12) **EUROPEAN PATENT APPLICATION**

(43) Date of publication:
01.04.2026 Bulletin 2026/14

(21) Application number: 25205092.7

(22) Date of filing: 26.09.2025

(51) International Patent Classification (IPC):
*C09D 11/101* (2014.01)   *C09D 11/322* (2014.01)
*C09D 11/38* (2014.01)

(52) Cooperative Patent Classification (CPC):
C09D 11/101; C09D 11/322; C09D 11/38

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024169116

(71) Applicant: Seiko Epson Corporation
Tokyo 160-8801 (JP)

(72) Inventors:
• YOSHIDA, Yoshinobu
Suwa-shi, 392-8502 (JP)
• SATO, Chigusa
Suwa-shi, 392-8502 (JP)

(74) Representative: Lewis Silkin LLP
Arbor
255 Blackfriars Road
London SE1 9AX (GB)

(54) **RADIATION-CURABLE INK JET INK COMPOSITION**

(57) A radiation-curable ink jet ink composition contains a polymerizable compound, a polymeric thioxanthone polymerization initiator, and bis(2,4,6-trimethylbenzoyl)-phenylphosphine oxide. The polymerizable compound contains no amine-modified oligomer, or the polymerizable compound contains an amine-modified oligomer, and an amount of the amine-modified oligomer is less than 5% by mass with respect to a total amount of the radiation-curable ink jet ink composition.

**FIG. 1**

TABLE 1:

| KIND | NAME | INFORMATION | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|
| MONOFUNCTIONAL MONOMER (WITHOUT HYDROXYL GROUP) | ACMO | Tg (°C) = 145 | 26.0 | 28.0 | 25.0 | 0.0 | 0.0 | 26.0 | 26.0 | 26.0 | 26.0 | 26.0 | 26.0 | 26.0 | 26.0 | 26.0 | 26.0 | 26.0 | 0.0 | 26.0 | 26.0 |
| | TBCHA | Tg (°C) = 77 | 0.0 | 0.0 | 0.0 | 56.0 | 0.0 | 0.0 | 0.0 | 0.0 | 0.0 | 0.0 | 0.0 | 0.0 | 0.0 | 0.0 | 0.0 | 0.0 | 26.0 | 0.0 | 0.0 |
| | CTFA | Tg (°C) = 27 | 30.0 | 30.0 | 29.0 | 0.0 | 56.0 | 30.5 | 31.0 | 30.0 | 30.0 | 30.0 | 30.0 | 30.0 | 30.0 | 30.0 | 30.0 | 30.0 | 30.0 | 43.5 | 30.0 |
| MONOFUNCTIONAL MONOMER (WITH HYDROXYL GROUP) | 4 HBA | Tg (°C) = -32 | 13.5 | 13.5 | 13.5 | 13.5 | 0.0 | 13.5 | 13.5 | 13.5 | 10.0 | 5.0 | 3.5 | 0.0 | 0.0 | 0.0 | 13.5 | 13.5 | 13.5 | 0.0 | 13.5 |
| | HPA | Tg (°C) = -7 | 0.0 | 0.0 | 0.0 | 0.0 | 0.0 | 0.0 | 0.0 | 0.0 | 0.0 | 8.5 | 0.0 | 13.5 | 0.0 | 0.0 | 0.0 | 0.0 | 0.0 | 0.0 | 0.0 |
| | HEA | Tg (°C) = -15 | 0.0 | 0.0 | 0.0 | 0.0 | 0.0 | 0.0 | 0.0 | 0.0 | 0.0 | 0.0 | 10.0 | 0.0 | 13.5 | 0.0 | 0.0 | 0.0 | 0.0 | 0.0 | 0.0 |
| | 620-100 | Tg (°C) = 14 | 0.0 | 0.0 | 0.0 | 0.0 | 13.5 | 0.0 | 0.0 | 0.0 | 0.0 | 0.0 | 0.0 | 0.0 | 0.0 | 13.5 | 0.0 | 0.0 | 0.0 | 0.0 | 0.0 |
| POLYFUNCTIONAL MONOMER | VEEA | Tg (°C) = 39 | 0.0 | 0.0 | 0.0 | 0.0 | 0.0 | 0.0 | 0.0 | 0.0 | 0.0 | 0.0 | 0.0 | 0.0 | 0.0 | 0.0 | 15.0 | 0.0 | 15.0 | 0.0 | 0.0 |
| | TPGDA | Tg (°C) = 62 | 15.0 | 15.0 | 15.0 | 15.0 | 15.0 | 15.0 | 15.0 | 15.0 | 15.0 | 15.0 | 15.0 | 15.0 | 15.0 | 15.0 | 0.0 | 0.0 | 0.0 | 15.0 | 15.0 |
| | DPGDA | Tg (°C) = 104 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 15.0 | 0.0 | 0.0 | 0.0 |
| OLIGOMER | CN371 NS | – | 2.0 | 0.0 | 4.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 0.0 |
| | CN991 NS | – | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 2.0 |
| POLYMERIZATION INHIBITOR | MEHQ | – | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | LA-7RD | – | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| POLYMERIZATION INITIATOR | 819 | MOLECULAR WEIGHT: 418 | 6.0 | 6.0 | 6.0 | 6.0 | 6.0 | 5.5 | 6.0 | 6.0 | 6.0 | 6.0 | 6.0 | 6.0 | 6.0 | 6.0 | 6.0 | 6.0 | 6.0 | 6.0 | 6.0 |
| | 7010 | MOLECULAR WEIGHT: 1839 | 3.5 | 3.5 | 3.5 | 3.5 | 3.5 | 3.5 | 2.5 | 2.5 | 3.5 | 3.5 | 3.5 | 3.5 | 3.5 | 3.5 | 3.5 | 3.5 | 3.5 | 3.5 | 3.5 |
| | TX | MOLECULAR WEIGHT: 660 | 0.0 | 0.0 | 0.0 | 0.0 | 0.0 | 0.0 | 1.0 | 0.0 | 0.0 | 0.0 | 0.0 | 0.0 | 0.0 | 0.0 | 0.0 | 0.0 | 0.0 | 0.0 | 0.0 |
| SLIP AGENT | BYK-UV3500 | – | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| DISPERSANT | Solsperse 36000 | | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| PIGMENT | CARBON BLACK | – | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| | TOTAL | | 100 | 100 | 100 | 100 | 100 | 100 | 100 | 100 | 100 | 100 | 100 | 100 | 100 | 100 | 100 | 100 | 100 | 100 | 100 |
| MONOFUNCTIONAL MONOMER/TOTAL AMOUNT OF INK COMPOSITION (% BY MASS) | | | 70 | 72 | 68 | 70 | 70 | 70 | 71 | 70 | 66 | 70 | 70 | 70 | 70 | 70 | 70 | 70 | 70 | 70 | 70 |
| MONOFUNCTIONAL MONOMER/TOTAL MONOMER (% BY MASS) | | | 82 | 83 | 82 | 82 | 82 | 82 | 82 | 82 | 81 | 82 | 82 | 82 | 82 | 82 | 82 | 82 | 82 | 82 | 82 |
| POLYFUNCTIONAL MONOMER/TOTAL MONOMER (% BY MASS) | | | 18 | 17 | 18 | 18 | 18 | 18 | 18 | 18 | 19 | 18 | 18 | 18 | 18 | 18 | 18 | 18 | 18 | 18 | 18 |
| MONOFUNCTIONAL MONOMER/POLYMERIZABLE COMPOUND (% BY MASS) | | | 80 | 83 | 78 | 80 | 80 | 80 | 81 | 80 | 80 | 80 | 80 | 80 | 80 | 80 | 80 | 80 | 80 | 80 | 80 |
| POLYFUNCTIONAL MONOMER/POLYMERIZABLE COMPOUND (% BY MASS) | | | 17 | 17 | 17 | 17 | 17 | 17 | 17 | 17 | 18 | 17 | 17 | 17 | 17 | 17 | 17 | 17 | 17 | 17 | 17 |
| MONOMER Tg (°C) | | | 60 | 62 | 59 | 57 | 31 | 60 | 60 | 60 | 64 | 63 | 62 | 64 | 63 | 67 | 56 | 68 | 35 | 70 | 60 |

**Description**

The present application is based on, and claims priority from JP Application Serial Number 2024-169116, filed September 27, 2024, the disclosure of which is hereby incorporated by reference herein in its entirety.

BACKGROUND

1. Technical Field

The present disclosure relates to a radiation-curable ink jet ink composition.

2. Related Art

The ink jet recording method enables high-resolution recording with a relatively small-scale apparatus, and many related techniques have been developed. For example, radiation-curable inks for packaging applications have been developed, and JP-A-2024-33318 discloses a photocurable ink jet ink composition containing a thioxanthone polymerization initiator and an amine-modified oligomer, which causes less migration and can be used for food packaging.

However, since the radiation-curable ink jet ink has a peculiar odor, it is required to reduce the odor of the ink in order to further expand the application. In addition, the ink is required to have viscosity and curability appropriate for an ink jet ink.

SUMMARY

According to an aspect of the disclosure, a radiation-curable ink jet ink composition contains a polymerizable compound, a polymeric thioxanthone polymerization initiator, and bis(2,4,6-trimethylbenzoyl)-phenylphosphine oxide. The polymerizable compound contains no amine-modified oligomer, or the polymerizable compound contains an amine-modified oligomer, and an amount of the amine-modified oligomer is less than 5% by mass with respect to a total amount of the radiation-curable ink jet ink composition.

BRIEF DESCRIPTION OF THE DRAWINGS

FIG. 1 is a table 1 showing compositions of radiation-curable ink jet ink compositions of Examples 1 to 19.
FIG. 2 is a table 2 showing compositions of radiation-curable ink jet ink compositions of Comparative Examples 1 to 4.
FIG. 3 is a table 3 showing evaluation results of Examples 1 to 19.
FIG. 4 is a table showing evaluation results of Comparative Examples 1 to 4.

DESCRIPTION OF EMBODIMENTS

Embodiments of the present disclosure will be described below. The embodiments described below describe examples of the present disclosure. The present disclosure is not limited to the following embodiments and includes various modifications made without changing the gist of the present disclosure. It should be noted that not all of the configurations described below are essential configurations of the present disclosure.

In the present specification, "(meth)acrylate" means either or both of acrylate and methacrylate, and "(meth)acrylic" means either or both of acrylic and methacrylic.

In the present specification, the term "oligomer" refers to a polymer, which is a dimer or a multimer obtained by polymerization of a monomer and has a low weight average molecular weight of 10000 or less. In the present specification, the weight-average molecular weight is a value measured by mass spectrometry.

In the present specification, the term "polymer" refers to a polymer having a molecular weight of 500 or more.

1. Radiation-Curable Ink Jet Ink Composition

The radiation-curable ink jet ink composition according to the embodiment contains a polymerizable compound, a polymeric thioxanthone polymerization initiator, and bis(2,4,6-trimethylbenzoyl)-phenylphosphine oxide. The polymerizable compound contain no amine-modified oligomer, or the polymerizable compound contains an amine-modified oligomer, and an amount of the amine-modified oligomer is less than 5% by mass with respect to a total amount of the radiation-curable ink jet ink composition. Hereinafter, components that can be included in the radiation-curable ink jet ink composition according to the embodiment will be described in detail.

1.1. Polymerization Initiator

The polymerization initiator generates active species when irradiated with radiation, such as ultraviolet rays and visible light, to initiate polymerization and cure the ink composition. The use of ultraviolet rays (UV) can improve the safety and reduce the cost of the light source lamp.

The radiation-curable ink jet ink composition according to the embodiment (also referred to as "ink composition" in this specification) contains, as a polymerization initiator, a polymeric thioxanthone polymerization initiator and bis(2,4,6-trimethylbenzoyl)-phenylphosphine oxide.

The molecular weight of the polymeric thioxanthone polymerization initiator is preferably 500 or more and 2500 or less, more preferably 600 or more and 2300 or less, and still more preferably 650 or more and 2000 or less. When the molecular weight is within the above range, the viscosity of the ink composition and the reduction of odor are excellent.

The molecular weight of the polymeric thioxanthone polymerization initiator is preferably a weight-average molecular weight.

The amount of the polymeric thioxanthone polymerization initiator is preferably 0.1% by mass or more and 10% by mass or less, more preferably 0.5% by mass or more and 5% by mass or less, and still more preferably 1.0% by mass or more and 3.5% by mass or less, with respect to the total amount of the ink composition. When the amount of the polymeric thioxanthone polymerization initiator is within the above range, the unreacted polymerizable compound and the decomposition product of the polymerization initiator are less likely to volatize, resulting in reduction of odor.

The amount of bis(2,4,6-trimethylbenzoyl)-phenylphosphine oxide is preferably 0.1% by mass or more and 10% by mass or less, more preferably 0.5% by mass or more and 8% by mass or less, and still more preferably 1.0% by mass or more and 6% by mass or less, with respect to the total amount of the ink composition. When the amount of bis(2,4,6-trimethylbenzoyl)-phenylphosphine oxide is within the above range, the curability of the ink composition is good, and the unreacted polymerizable compound and the decomposition product of the polymerization initiator are less likely to volatize, resulting in reduction of odor.

When the polymeric thioxanthone polymerization initiator and bis(2,4,6-trimethylbenzoyl)-phenylphosphine oxide are used in combination as the polymerization initiator, the curability of the ink composition can be further improved, and an ink composition having less odor and high curability can be produced.

The bis(2,4,6-trimethylbenzoyl)-phenylphosphine oxide is preferably contained in a larger amount than the polymeric thioxanthone polymerization initiator. The ratio (w1/w2) of the amount (w1) of the bis(2,4,6-trimethylbenzoyl)-phenylphosphine oxide to the amount (w2) of the polymeric thioxanthone polymerization initiator is preferably 1/5 or more and less than 1/1, more preferably 1/4 or more and less than 1/1, and still more preferably 1/3 or more and less than 1/1.

When the ratio w1/w2 is within the above range, it is easy to achieve both odor reduction and high curability in a more excellent state.

Examples of the polymeric thioxanthone polymerization initiator include 1,3-di({α-[1-chloro-9-oxo-9H-thioxanthen-4-yl)oxy]acetylpoly[oxy(1-methylethylene)]}oxy)-2,2-bis({α-[1-chloro-9-oxo-9H-thioxanthen-4-yl)oxy]acetylpoly[oxy(1-methylethylene)]}oxymethyl)propane (CAS number: 1003567-83-6), and α-[2-[(9-oxo-9H-thioxanthenyl)oxy]acetyl]-ω-[2-[(9-oxo-9H-thioxanthenyl)oxy]acetyl]oxy]poly(oxy-1,4-butanediyl) (CAS number: 813452-37-8).

Examples of commercially available products of the polymeric thioxanthone polymerization initiator include Speed Cure® 7010 (1,3-di({α-[1-chloro-9-oxo-9H-thioxanthen-4-yl)oxy]acetylpoly[oxy(1-methylethylene)]}oxy)-2,2-bis({α-[1-chloro-9-oxo-9H-thioxanthen-4-yl)oxy]acetylpoly[oxy(1-methylethylene)]}oxymethyl)propane) (trade name, manufactured by Sartomer), Omnipol® TX (α-[2-[(9-oxo-9H-thioxanthenyl)oxy]acetyl]-ω-[2-[(9-oxo-9H-thioxanthenyl) oxy]acetyl]oxy]poly(oxy-1,4-butanediyl)) (trade name, manufactured by IGM RESINS), and Genopol TX-2 (trade name, manufactured by RAHN).

Among the above commercially available products, one or more selected from Omnipol® TX and Speed Cure® 7010 are preferably contained.

The total amount of the polymerization initiator is preferably 1% by mass or more and 20% by mass or less with respect to the total amount of the ink composition to avoid undissolved residues of the polymerization initiator or coloring derived from the polymerization initiator.

The polymerization initiator contributes to the odor and curability of the radiation-curable ink jet ink composition but does not necessarily contribute alone, and the curability of the radiation-curable ink jet ink composition varies depending on the combination with the polymerizable compound, the polymerization inhibitor, the polymerization accelerator, and the like.

1.2. Polymerizable Compound

The radiation-curable ink jet ink composition according to the embodiment contains a polymerizable compound. Examples of the polymerizable compound include a monofunctional monomer, a polyfunctional monomer, and an oligomer. In this specification, monofunctional monomers and polyfunctional monomers are collectively simply referred to as "monomers".

The amount of the monomer in the polymerizable compound is preferably 90% by mass or more, more preferably 95% by mass or more, and still more preferably 98% by mass or more, with respect to the total amount of the polymerizable compound. When the amount of the monomer is within the above range, the viscosity of the ink ejected at the time of ink jet recording can be adjusted to fall within an appropriate range.

In this embodiment, among the polymerizable compounds, a polymerizable compound having a glass transition temperature of 15°C or lower is preferably contained.

The glass transition temperature (Tg) of the polymerizable compound having a glass transition temperature of 15°C or lower is preferably 15°C or lower, more preferably 5°C or lower, and still more preferably 0°C or lower. When the polymerizable compound having a glass transition temperature of 15°C or lower is contained, the flexibility of the cured product of the ink composition and the adhesion to a recording medium increases.

Here, the "glass transition temperature of the polymerizable compound" refers to a value obtained by differential scanning calorimetry (DSC) of a homopolymer when the polymerizable compound forms the homopolymer.

The polymerizable compound having a glass transition temperature of 15°C or lower preferably contains a hydroxyl group-containing polymerizable compound. The hydroxyl group-containing polymerizable compound may be used alone or in combination of two or more kinds thereof. The presence of the hydroxyl group-containing polymerizable compound allows the cured product of the ink composition to have higher adhesion to a recording medium.

Examples of the hydroxyl group-containing polymerizable compound include 2-hydroxybutyl(meth) acrylate, hydroxyethyl(meth)acrylate, hydroxypropyl(meth)acrylate, 2-hydroxy-3-phenoxypropyl(meth) acrylate, 4-hydroxybutyl acrylate, and 2-hydroxy-3-phenoxypropyl acrylate. Among these, any one of 4-hydroxybutyl acrylate, hydroxypropyl acrylate, and hydroxyethyl acrylate is preferably contained.

The polymerizable compound having a glass transition temperature of 15°C or lower may be any of a monofunctional monomer, a polyfunctional monomer, and an oligomer, but is preferably a monofunctional monomer.

The amount of the polymerizable compound having a glass transition temperature of 15°C or lower is preferably 5% by mass or more, more preferably 7% by mass or more, and still more preferably 10% by mass or more, with respect to the total amount of the radiation-curable ink jet ink composition. When the amount of the polymerizable compound having a glass transition temperature of 15°C or lower is within the above range, the flexibility of the cured product of the ink composition is further improved, and the adhesion of the ink composition to the recording medium can be further improved. Additionally, the above amount is preferably 35% by mass or less, more preferably 30% by mass or less, and still more preferably 25% by mass or less.

When the polymerizable compound contains two or more kinds of monomers, the glass transition temperature (Tg) of the monomer in the polymerizable compound is obtained by weighted average. The weighted average of the glass transition temperatures of the monomers is preferably 30°C or higher, more preferably 35°C or higher, and still more preferably 40°C or higher. When the glass transition temperature of the monomer is within the above range, the viscosity and the curability of the ink composition can be stabilized. The weighted average of the glass transition temperatures of the monomers is preferably 70°C or lower, more preferably 65°C or lower, and still more preferably 60°C or lower.

Here, a method for calculating a weighted average of glass transition temperatures of polymerizable compounds is explained. The value of the weighted average of the glass transition temperatures is defined as $Tg_{All}$, the glass transition temperature of the homopolymer of each polymerizable compound is defined as $Tg_N$, and the content mass ratio of the polymerizable compound is defined as $X_N$ (wt%). "N" is a number in order from 1 according to the type of the polymerizable compound contained in the radiation-curable ink jet ink composition. For example, when three kinds of polymerizable compounds are used, $Tg_1$, $Tg_2$, and $Tg_3$ exist. The weighted average $Tg_{All}$ of the glass transition temperatures of the homopolymers is the sum of the products of the glass transition temperature $Tg_N$ of the homopolymer of each polymerizable compound and the content mass ratio $X_N$ of the monomer. Thus, the following equation (1) is satisfied.

$$Tg_{All} = \Sigma Tg_N \times X_N \quad (1)$$

1.2.1. Monofunctional Monomer

The radiation-curable ink jet ink composition according to the embodiment may contain a monofunctional monomer. The amount of the monofunctional monomer is preferably 50% by mass or more, more preferably 60% by mass or more, and still more preferably 70% by mass or more, with respect to the total amount of the polymerizable compound. When the amount of the monofunctional monomer is within the above range, the viscosity of the ink composition and the flexibility of the cured product of the ink can be adjusted to fall within appropriate ranges.

The radiation-curable ink jet ink composition according to the embodiment may contain a monofunctional monomer (hereinafter, also referred to as "another monofunctional monomer") other than the above-described monofunctional monomer having a glass transition temperature of 15°C or lower.

The other monofunctional monomer is not particularly limited but is preferably one having a cyclic skeleton. Examples of the monofunctional monomer having a cyclic skeleton include a nitrogen-containing heterocyclic compound, a hydrocarbon ring compound, and a cyclic ether compound. By using the monofunctional monomer having a cyclic skeleton, the curability and the abrasion resistance of the cured product of the ink composition are improved.

Examples of the nitrogen-containing heterocyclic compound include N-vinylcaprolactam (n-VC), N-vinylcarbazole, N-vinylpyrrolidone, acryloylmorpholine (ACMO), and 5-methyl-3-vinyloxazolidin-2-one (VMOX). The amount of the nitrogen-containing heterocyclic compound is preferably 5% by mass or more and 60% by mass or less, preferably 12.5% by mass or more and 50% by mass or less, more preferably 15% by mass or more and 45% by mass or less, and still more preferably 20% by mass or more and 40% by mass or less, with respect to the total amount of the ink composition. When the amount of the nitrogen-containing heterocyclic compound is within the above range, the ink composition tends to have high curability and adhesion.

Examples of the hydrocarbon ring compound include tert-butylcyclohexyl acrylate, 3,3,5-trimethylcyclohexyl acrylate, isobornyl(meth)acrylate, and dicyclopentanyl(meth)acrylate.

Examples of the cyclic ether compound include cyclic trimethylolpropane formal acrylate (CTFA), cyclic trimethylolpropane formal methacrylate, tetrahydrofurfuryl acrylate (THFA), and tetrahydrofurfuryl methacrylate.

Among these, at least one selected from acryloylmorpholine, tert-butylcyclohexyl acrylate, and cyclic trimethylolpropane formal acrylate is preferably contained.

The monofunctional monomer may be used alone or in combination of two or more kinds thereof.

### 1.2.2. Multifunctional Monomer

The radiation-curable ink jet ink composition according to the embodiment may contain a polyfunctional monomer. The amount of the polyfunctional monomer is preferably 5% by mass or more, more preferably 10% by mass or more, and still more preferably 15% by mass or more, with respect to the total amount of the polymerizable compound. When the amount of the polyfunctional monomer is within the above range, the curability of the ink composition tends to be improved.

The polyfunctional monomer preferably includes one or more selected from vinyl ether group-containing (meth)acrylate and propylene glycol diacrylate. The presence of the vinyl ether group-containing (meth)acrylate and/or propylene glycol diacrylate improves the curability of the radiation-curable ink jet ink composition and also the abrasion resistance of the cured product of the ink composition.

Examples of vinyl ether group-containing (meth)acrylate include (meth)acrylic acid 2-vinyloxyethyl, (meth)acrylic acid 3-vinyloxypropyl, (meth)acrylic acid 1-methyl-2-vinyloxyethyl, (meth)acrylic acid 2-vinyloxypropyl, (meth)acrylic acid 4-vinyloxybutyl, (meth)acrylic acid 1-methyl-3-vinyloxypropyl, (meth)acrylic acid 1-vinyloxymethylpropyl, (meth)acrylic acid 2-methyl-3-vinyloxypropyl, (meth)acrylic acid 1,1-di-methyl-2-vinyloxyethyl, (meth)acrylic acid 3-vinyloxybutyl, (meth)acrylic acid 1-methyl-2-vinyloxypropyl, (meth)acrylic acid 2-vinyloxybutyl, (meth)acrylic acid 4-vinyloxycyclohexyl, (meth)acrylic acid 6-vinyloxyhexyl, (meth)acrylic acid 4-vinyloxymethylcyclohexylmethyl, (meth)acrylic acid 3-vinyloxymethylcyclohexylmethyl, (meth)acrylic acid 2-vinyloxymethylcyclohexylmethyl, (meth)acrylic acid p-vinyloxymethylphenylmethyl, (meth)acrylic acid m-vinyloxymethylphenylmethyl, (meth)acrylic acid o-vinyloxymethylphenylmethyl, (meth)acrylic acid 2-(2-vinyloxyethoxy)ethyl, and 2-(2-vinyloxyethoxy)ethyl acrylate (VEEA).

Examples of propylene glycol diacrylate include tripropylene glycol diacrylate (TPGDA) and dipropylene glycol diacrylate (DPGDA).

### 1.2.3. Oligomer

### 1.2.3.1. Amine-modified Oligomer

The radiation-curable ink jet ink composition according to the embodiment may contain an amine-modified oligomer, but from the viewpoint of improving the ejection stability without increasing the viscosity of the radiation-curable ink jet ink composition, the radiation-curable ink jet ink composition contains no amine-modified oligomer or contains an amine-modified oligomer in an amount of more than 0% by mass and less than 5% by mass with respect to the total amount of the ink composition.

The amine-modified oligomer improves the curability of the radiation-curable ink jet ink composition, but the presence of the amine-modified oligomer in an amount of 5% by mass or more increases the viscosity, and the ejection stability at the time of ink jet recording is likely to decrease.

The amine-modified oligomer is an oligomer having one or more amino groups in the molecule. The amine-modified oligomer may contain one or more functional groups other than an amino group and preferably contain two or more functional groups other than an amino group.

Examples of the amine-modified oligomer include an amine-modified (meth)acrylate oligomer.

The amount of the amine-modified oligomer is preferably less than 5% by mass, more preferably less than 3% by mass, still more preferably less than 2% by mass, particularly preferably less than 1% by mass, more particularly preferably less than 0.5% by mass, and still more particularly preferably 0% by mass, with respect to the total amount of the ink composition. When the amount of the amine-modified oligomer is less than 5% by mass, the curability can be improved without increasing the viscosity of the radiation-curable ink jet ink composition.

In addition, the amount of the amine-modified oligomer, if contained, is more than 0% by mass with respect to the total amount of the ink composition, but may be 0.5% by mass or more, may be 1% by mass or more, and may be 2% by mass or more.

Examples of commercially available products of the amine-modified oligomer include CN371 NS, CN373, CN374, CN383, CN386, CN550, and CN551 (trade names, all of which are manufactured by Sartomer), PHOTOMER® 4771, PHOTOMER 4250, and PHOTOMER 4068 (all of which are manufactured by IGM RESINS), EBECRYL® 80, EBECRYL 7100, and EBECRYL P115 (all of which are manufactured by DAICEL-ALLNEX LTD.), and LAROMER® PO 77F, LAROMER PO 8996, and LAROMER PO 94F (all of which are manufactured by BASF).

The amine-modified oligomer strongly contributes to the curability and viscosity of the radiation-curable ink jet ink composition but does not necessarily contribute solely to them. The characteristics of the radiation-curable ink jet ink composition and the cured product thereof change depending on the combination of the amin-modified oligomer and other polymerizable compounds.

### 1.2.3.2. Urethane Oligomer

The radiation-curable ink jet ink composition according to the embodiment may contain a urethane oligomer, but from the viewpoint of improving ejection stability without increasing the viscosity of the radiation-curable ink jet ink composition, the amount of the urethane oligomer is preferably less than 10% by mass with respect to the total amount of the ink composition.

The urethane oligomer tends to increase the viscosity of the ink composition and is used to maintain a good balance of physical properties. The amount of the urethane oligomer is preferably less than 10% by mass, more preferably less than 5% by mass, and still more preferably less than 3% by mass, with respect to the total amount of the polymerizable compound.

Examples of the urethane oligomer include a urethane (meth)acrylate oligomer.

Examples of commercially available products of the urethane oligomer include CN991 NS, CN996 NS, CN9002, CN9010 NS, and CN9013 NS (trade names, all of which are manufactured by Sartomer), New Frontier R-1235, R-1220, R-1304, R-1214, R-1302XT, and R-1603 (trade names, all of which are manufactured by DKS Co. Ltd.), and Quick Cure® (manufactured by KJ Chemicals Corporation).

### 1.3. Other Components

The radiation-curable ink jet ink composition according to the embodiment may further contain additives, such as a coloring material, a dispersant, a polymerization inhibitor, a slip agent, and a photosensitizer, if necessary.

### 1.3.1. Coloring Material

The radiation-curable ink jet ink composition according to the embodiment may further contain a coloring material. The radiation-curable ink jet ink composition according to the embodiment can be used as a colored ink composition when containing a coloring material.

The total amount of the coloring materials is preferably 0.1% by mass or more and 10.0% by mass or less, and more preferably 0.5% by mass or more and 5.0% by mass or less, with respect to the total amount of the ink composition. The radiation-curable ink jet ink composition according to the embodiment may be a clear ink, which does not contain a coloring material or contains a coloring material in an amount not intended for coloring. The amount not intended for coloring is, for example, 0.1% by mass or less with respect to the total amount of the ink composition.

As the coloring material, a pigment is preferably used. When a pigment is used, a pigment dispersion may be prepared in advance, and the dispersion may be used in the ink composition. The pigment dispersion may contain, for example, a dispersant described below to allow the polymerizable compound and the pigment to disperse. As the pigment, any of an inorganic pigment and an organic pigment can be used.

Examples of the inorganic pigment include carbon blacks (C.I. Pigment Black 7) such as furnace black, lamp black, acetylene black, and channel black, iron oxide, and titanium oxide.

Examples of the organic pigment include azo pigments, such as an insoluble azo pigment, a condensed azo pigment, azolake, and a chelate azo pigment, polycyclic pigments, such as a phthalocyanine pigment, a perylene and perinone pigment, an anthraquinone pigment, a quinacridone pigment, a dioxane pigment, a thioindigo pigment, an isoindolinone pigment, and a quinophthalone pigment, dye chelate (such as basic dye-type chelate and acid dye-type chelate), dye lake (basic dye-type lake and acid dye-type lake), a nitro pigment, a nitroso pigment, carbon black, aniline black, and a daylight fluorescent pigment.

Examples of black pigments include No. 2300, No. 900, No. MCF88, No. 33, No. 40, No. 45, No. 52, MA7, MA8, MA100, and No. 2200B (trade names, all of which are manufactured by Mitsubishi Chemical Corporation), Raven 5750, Raven 5250, Raven 5000, Raven 3500, Raven 1255, and Raven 700 (all of which are manufactured by Carbon Columbia), Regal 400R, Regal 330R, Rega1 660R, Mogul® L, Monarch® 700, Monarch 800, Monarch 880, Monarch 900, Monarch 1000, Monarch 1100, Monarch 1300, and Monarch 1400 (trade names, all of which are manufactured by Cabot Japan K. K), Color Black FW1, Color Black FW2, Color Black FW2V, Color Black FW18, Color Black FW200, Color Black S150, Color Black S160, Color Black S170, Printex® 35, Printex U, Printex V, Printex 140U, Special Black 6, Special Black 5, Special Black 4A, and special Black 4 (trade names, all of which are manufactured by Degussa).

Examples of white pigments include C.I. Pigment White 6, 18, and 21 and metal compounds, such as metal oxides, barium sulfate, and calcium carbonate. Examples of the metal oxide include titanium dioxide, zinc oxide, silica, alumina, and magnesium oxide.

Examples of yellow pigments include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Example of magenta pigments include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, and 245, and C. I. Pigment Violet 19, 23, 32, 33, 36, 38, 43, and 50.

Examples of cyan pigments include C.I. Pigment Blue 1, 2, 3, 15, 15:1, 15:2, 15:3, 15:34, 15:4, 16, 18, 22, 25, 60, 65, and 66, and C. I. Vat Blue 4 and 60.

Examples of color pigments other than magenta, cyan, and yellow include C.I. Pigment Green 7, 10, C.I. Pigment Brown 3, 5, 25, 26, and C.I. Pigment Orange 1, 2, 5, 7, 13, 14, 15, 16, 24, 34, 36, 38, 40, 43, and 63.

The pigments may be used alone or in combination of two or more kinds thereof.

1.3.2. Dispersant

When the radiation-curable ink jet ink composition according to the embodiment contains a pigment, it may further contain a dispersant to further improve dispersion of the pigment. The dispersant may be used alone or in combination of two or more kinds thereof.

The dispersant is not particularly limited, and examples thereof include a dispersant commonly used for preparing a pigment dispersion liquid, such as a polymer dispersant. Specific examples of the dispersant include dispersants containing, as a main constituent, at least one of polyoxyalkylene polyalkylene polyamine, vinyl-based polymer and copolymer, acryl-based polymer and copolymer, polyester, polyamide, polyimide, polyurethane, amino-based polymer, silicon-containing polymer, sulfur-containing polymer, fluorine-containing polymer, and epoxy resin.

Examples of commercially available products of the polymer dispersant include AJISPER series manufactured by Ajinomoto Fine-Techno Co., Inc., Solsperse series (such as Solsperse 36000) available from Avecia or Noveon, DISPERBYK series manufactured by BYK Additives & Instruments, and DISPARLON series manufactured by Kusumoto Chemicals, Ltd.

The amount of the dispersant is preferably 0.01% by mass or more and 1.0% by mass or less, and more preferably 0.1% by mass or more and 0.5% by mass or less, with respect to the total amount of the ink composition.

1.3.3. Polymerization Inhibitor

The radiation-curable ink jet ink composition according to the embodiment may further contain a polymerization inhibitor. The polymerization inhibitor may be used alone or in combination of two or more kinds thereof.

Examples of the polymerization inhibitor include, but are not limited to, p-methoxyphenol, hydroquinone monomethyl ether (MEHQ), 4-hydroxy-2,2,6,6-tetramethylpiperidine-N-oxyl, hydroquinone, cresol, tert-butylcatechol, 3,5-di-tert-butyl-4-hydroxytoluene, 2,2'-methylenebis(4-methyl-6-tert-butylphenol), 2,2'-methylenebis(4-ethyl-6-butylphenol), 4,4'-thiobis(3-methyl-6-tert-butylphenol), and a hindered amine compound.

In addition, examples of commercially available products of the polymerization inhibitor include ADEKA STAB LA-7RD (2,2,6,6-tetramethyl-4-hydroxypiperidine-1-oxyl), LA-52, LA-57, LA-62, LA-63P, LA-68LD, LA-77Y, LA-77G, LA-81, LA-82 (1,2,2,6,6-pentamethyl-4-piperidyl methacrylate), LA-87 (trade names, all of which are manufactured by ADEKA Corporation), IRGASTAB UV10 (4,4'-[1,10-dioxo-1,10-decanediyl)bis(oxy)]bis[2,2,6,6,-tetramethyl]-1-piperidinyloxy)) (CAS.2516-92-9), TINUVIN 123 (4-hydroxy-2,2,6,6-tetramethylpiperidine-N-oxyl), TINUVIN 111FDL, TINUVIN 144, TINUVIN 152, TINUVIN 292, TINUVIN 765, TINUVIN 770DF, TINUVIN 5100, SANOL LS-2626, CHIMASSORB 119FL, CHIMASSORB 2020 FDL, CHIMASSORB 944 FDL, TINUVIN 622 LD (trade names, all of which are manufactured by BASF), FA-711HM, FA-712HM (2,2,6,6-tetramethylpiperidinyl methacrylate, trade names, manufactured by Hitachi Chemical Company, Ltd.).

The amount of the polymerization inhibitor is preferably 0.01% by mass or more and 1.0% by mass or less, and more preferably 0.1% by mass or more and 0.5% by mass or less, with respect to the total amount of the ink composition.

1.3.4. Slip Agent

The radiation-curable ink jet ink composition according to the embodiment may further contain a slip agent. The slip agent may be used alone or in combination of two or more kinds thereof.

The slip agent is preferably a silicone-based surfactant, and more preferably a polyester-modified silicone or polyether-modified silicone. Examples of the polyether-modified silicone include BYK-378, 3455, BYK-UV3500, 3510, and 3530 (all of which are manufactured by BYK Additives & Instruments), and examples of the polyester-modified silicone include BYK-3570 (manufactured by BYK Additives & Instruments).

The amount of the slip agent is preferably 0.1% by mass or more and 1.0% by mass or less, and more preferably 0.3% by mass or more and 0.8% by mass or less, with respect to the total amount of the ink composition.

1.3.5. Photosensitizer

The radiation-curable ink jet ink composition according to the embodiment may further contain a photosensitizer. Examples of the photosensitizer include amine compounds (such as aliphatic amine, amine containing an aromatic group, piperidines, a reactive product of epoxy resin and amine, and triethanolamine triacrylate), urea (such as allylthiourea and o-tolylthiourea), sulfur compounds (such as sodium diethyldithiophosphate and a soluble salt of aromatic sulfinic acid), nitrile-based compounds (such as N,N-diethyl-p-aminobenzonitrile), phosphorus compounds (such as tri-n-butylphosphine and sodium diethyldithiophosphide), nitrogen compounds (such as Michler's ketone, an N-nitrisohydroxylamine derivative, an oxazolidine compound, a tetrahydro-1,3-oxazine compound, and condensates of formaldehyde or acetaldehyde and amine), and chlorine-compounds (such as tetrachloromethane and hexachloroethane).

### 1.4. Physical Properties

The viscosity of the radiation-curable ink jet ink composition according to the embodiment at 20°C is preferably less than 25 mPa·s, more preferably 15 mPa·s or more and less than 20 mPa·s, and still more preferably less than 15 mPa·s. The ink composition having the viscosity at 20°C within the above range can be ejected through a nozzle in an appropriate amount, enabling the ink composition to be suitably used for an ink jet recording apparatus. The viscosity can be measured by using a viscoelasticity tester MCR-301 (manufactured by Anton Paar GmbH). The shear rate is increased from 10 ($s^{-1}$) to 1000 ($s^{-1}$) in an environment at 20°C, and the viscosity is read when the shear rate is 200.

### 2. Ink Jet Recording Method

Next, an ink jet recording method using the above-described radiation-curable ink jet ink composition will be described. An example of such an ink jet recording method includes an ejection step of ejecting the radiation-curable ink jet ink composition described above from an ink jet head onto a recording medium and an irradiation step of irradiating the radiation-curable ink jet ink composition attached to the recording medium with radiation. Hereinafter, steps of the ink jet recording method and the recording medium used in the ink jet recording method will be described.

### 2.1. Ejection Step

In the ejection step, the ink composition in the form of droplets having a minute particle diameter is ejected from the ink jet head onto the recording medium.
Examples of the ink jet head used in the ejection step include a line head used in a line type and a serial head used in a serial type.
In the line system, an ink jet head (line head) having a width equal to or larger than the recording width of the recording medium is mounted on the recording apparatus, and the ink composition is ejected while the line head and the recording medium are relatively moved in a scanning direction (longitudinal direction of the recording medium, transport direction) intersecting the width direction of the recording medium to record an image on the recording medium.
In the serial system, an ink jet head (serial head) is mounted on a carriage, which can move in a width direction of a recording medium, and the ink composition is ejected while the carriage is moved in a main scanning direction (lateral direction of the recording medium, or width direction) to record an image on the recording medium.

### 2.2. Irradiation Step

In the irradiation step, the radiation-curable ink jet ink composition attached to the recording medium is irradiated with radiation. The polymerizable compound in the ink composition starts polymerization reaction, when irradiated with radiation, and is cured to form a coating film.
When the ink composition that contains a polymerization initiator is irradiated with radiation, the polymerization initiator is excited and cleaved to generate radicals and acids. The generated radical or the like accelerates the polymerization reaction of the monomer.
Examples of the radiation include ultraviolet rays, infrared rays, visible light, and X-rays. When ultraviolet rays are used as the radiation, a UV LED (Light Emitting Diode), an LD (Laser Diode), a high-pressure mercury lamp, a metal halide lamp, or the like can be used as a light source. When a UV LED or an LD is used, the wavelength of the emitted radiation is preferably 350.0 nm or more and 430.0 nm or less.
In the irradiation step, the irradiation energy of the radiation irradiated at one time is preferably 150 $mJ/cm^2$ or more and less than 250 $mJ/cm^2$, and more preferably less than 150 $mJ/cm^2$. The irradiation energy of the radiation within the above range can have effects more efficiently on the surface and the entire of the ink composition.

### 2.3. Recording Medium

The form of the recording medium used in the ink jet recording method is not particularly limited, and examples thereof include a film form and a board form.
The material of the recording medium is not particularly limited, and examples thereof include resins such as polyvinyl chloride, polyethylene terephthalate, polycarbonate, polystyrene, polyurethane, polyethylene, polypropylene, polyvinyl acetal, cellulose diacetate, cellulose triacetate, cellulose propionate, cellulose butyrate, cellulose acetate butyrate, and cellulose nitrate, metals such as iron, silver, copper, and aluminum, and glass.

### 3. Examples

Hereinafter, the present disclosure will be described in more detail with reference to examples, but the present disclosure is not limited to these examples. Hereinafter, "%" is based on mass unless otherwise specified.

### 3.1. Preparation of Ink Composition

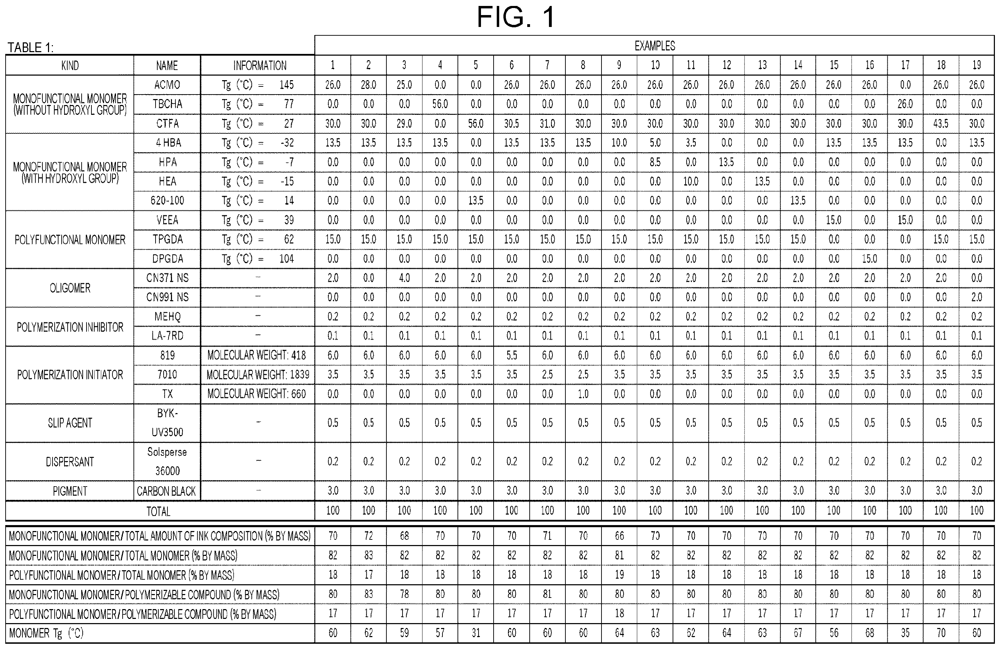

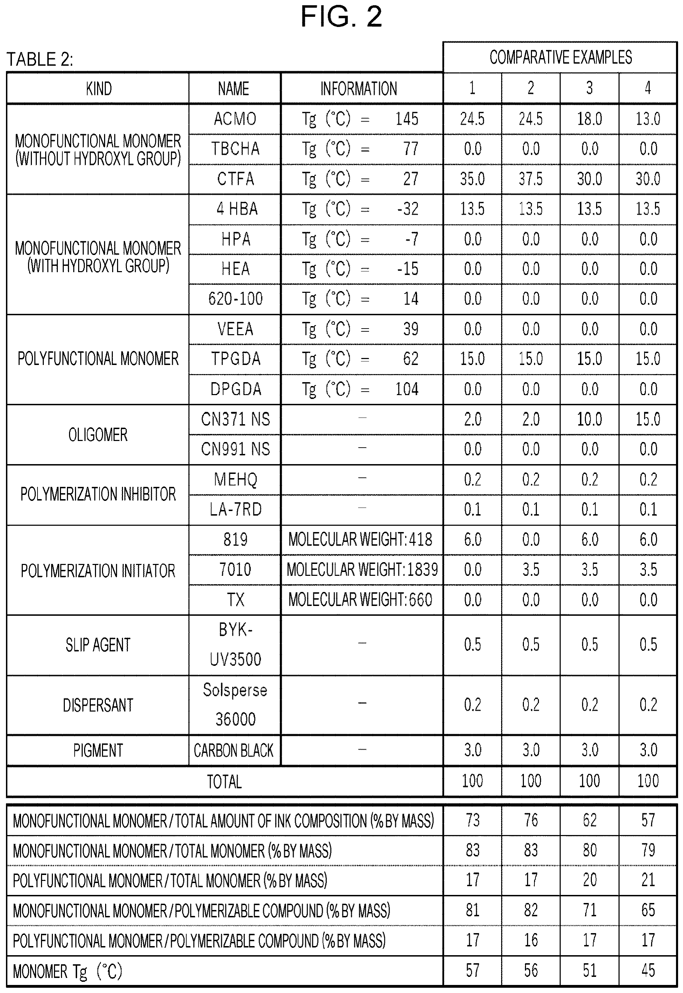

First, a pigment, a dispersant, and some of polymerizable compounds are put into a container and stirred to produce a pigment dispersion liquid in which the pigment is dispersed in the polymerizable compound. Next, the pigment dispersion liquid and the remaining components are put into a container to have the composition (% by mass) indicated in Table 1 (FIG. 1) and Table 2 (FIG. 2), mixed and stirred for 2 hours with a magnetic stirrer and then filtered with a membrane filter having a pore diameter of 5 μm, producing the ink compositions of Examples and Comparative Examples.

The components in Tables 1 and 2 are as follows.

Monofunctional Monomer (without hydroxyl group)

ACMO: trade name, manufactured by KJ Chemicals Corporation, acryloylmorpholine
TBCHA: tert -butylcyclohexyl acrylate
CTFA: cyclic trimethylolpropane formal acrylate

Monofunctional Monomer (with hydroxyl group)

4HBA: 4-hydroxybutyl acrylate
HPA: hydroxypropyl acrylate
HEA: hydroxyethyl acrylate
620-100: trade name, manufactured by KJ Chemicals Corporation, 2-hydroxy-3-phenoxypropyl acrylate

Polyfunctional Monomer

VEEA: 2-(2-vinyloxyethoxy)ethyl acrylate
TPGDA: tripropylene glycol diacrylate
DPGDA: dipropylene glycol diacrylate

Oligomer

CN371 NS: trade name, manufactured by Sartomer, amine-modified(meth)acrylate
CN991 NS: trade name, manufactured by Sartomer, urethane diacrylate Polymerization Inhibitor
MEHQ: hydroquinonemonomethylether
LA-7RD: trade name "Adekastab LA-7RD", manufactured by ADEKA Corporation Polymerization Initiator
819: trade name "Omnirad 819", manufactured by IGM RESINS, acylphosphine oxide-based polymerization initiator
7010: trade name "SpeedCure 7010", manufactured by Sartomer, polymeric thioxanthone polymerization initiator
TX: trade name "Omnipol TX", manufactured by IGM RESINS, polymeric thioxanthone polymerization initiator

Slip Agent
BYK UV3500: manufactured by BYK Additives & Instruments
Dispersant
Solsperse 36000: trade name, manufactured by Lubrizol Corporation
Pigment
Carbon black: C.I. Pigment Black 7

3.2. Ink Jet Ink Composition and Cured Product Evaluation

3.2.1. Glass transition Temperature (Tg) of Monomer

The glass transition temperature (Tg) of the monomer of the ink composition was calculated by weighted averaging using the mass ratio of each monomer to total monomer in the ink composition.

3.2.2. Viscosity

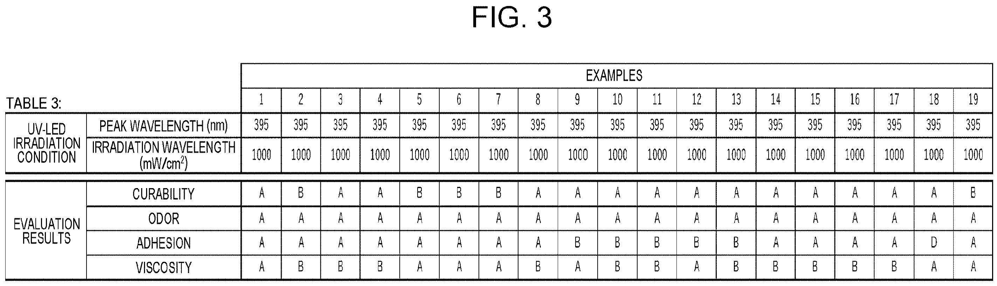

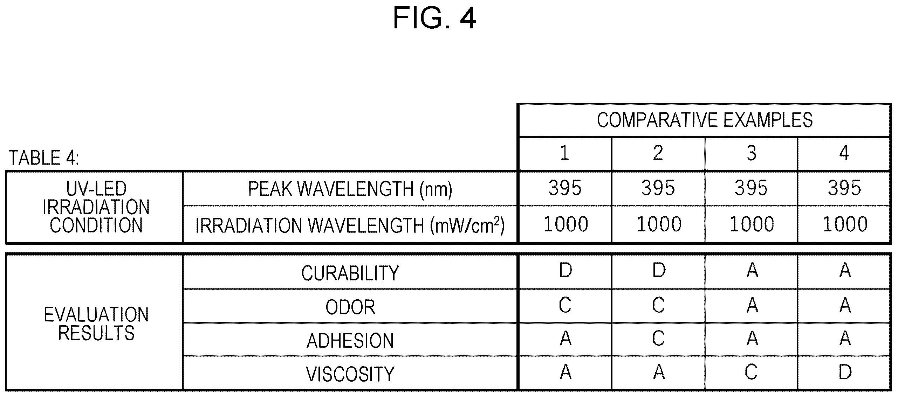

The viscosity (mPa·s) of the radiation-curable ink jet ink of each example was determined using a rotational viscometer "Rheometer (MCR-301, manufactured by Anton Paar GmbH)". The evaluation criteria were as follows, and the evaluation results are indicated in Table 3 (FIG. 3) and Table 4 (FIG. 4).

Evaluation Criteria

A: less than 15 mPa·s
B: 15 mPa·s or more and less than 20 mPa·s
C: 20 mPa·s or more and less than 25 mPa·s
D: 25 mPa·s or more

3.2.3. Curability

The radiation-curable ink jet ink composition is applied onto a PET film with a bar coater. Next, irradiation is performed using a UV-LED under the conditions described in Table 3 and Table 4, and the irradiation energy required to reach a tack-free state is determined.

The tack-free state is determined by rubbing the surface of the cured product 10 times with a cotton swab under a 100 g load and checking whether the ink adheres to the cotton swab or whether the cured product on the recording medium has scratches.

The irradiation energy $(mJ/cm^2)$ is determined from the product of the irradiation intensity $(mW/cm^2)$ measured on the surface irradiated by the light source and the irradiation duration (sec). The irradiation intensity is measured using an ultraviolet intensity meter UM-10 and a light receiving unit UM-400 (both manufactured by KONICA MINOLTA SENSING, INC.). The evaluation criteria are as follows, and the evaluation results are indicated in Tables 3 and 4.

Evaluation Criteria

A: less than 150 mJ/cm$^2$
B: 150 mJ/cm$^2$ or more and less than 250 mJ/cm$^2$
C: 250 mJ/cm$^2$ or more and less than 350 mJ/cm$^2$
D: 350 mJ/cm$^2$ or more

3.2.4. Adhesion

The cured film produced for evaluation of curability is evaluated for adhesion by a cross-cut test in accordance with JIS K5600-5-6.

Specifically, a blade of a cutter is brought into contact with the cured film in a direction perpendicular to the cured film to make a 6 × 6 grid of cuts using squares with a distance of 1 mm between cuts. A clear adhesive tape having a length of about 75 mm is attached to the grid, and the tape is rubbed with a finger sufficiently to allow the cured film to show through. Next, within 5 minutes from the attachment of the tape, the tape is peeled off from the cured film at an angle of about 60° in 0.5 to 1.0 seconds, and the state of the grid is visually checked. The evaluation criteria are as follows, and the evaluation results are indicated in Tables 3 and 4.

Evaluation Criteria

A: detachment of the cured film is observed in less than 20% of the grid
B: detachment of the cured film is observed in 20% or more and less than 25% of the grid
C: detachment of the cured film is observed in 25% or more and less than 30% of the grid
D: detachment of the cured film is observed in 30% or more of the grid

3.2.5. Odor

The radiation-curable ink jet ink compositions of Examples are each applied to a recording medium and cured using a UV-LED. The resultant cured products are evaluated for odor. The evaluation criteria are as follows, and the evaluation results are indicated in Tables 3 and 4.

Evaluation Criteria

A: no odor or slight odor is recognized
B: odor is recognized
C: strong odor is recognized

3.3. Evaluation Results

From the Examples and Comparative Examples, the following were found.

Examples of the radiation-curable ink jet ink composition, which contain the polymeric thioxanthone polymerization initiator and bis(2,4,6-trimethylbenzoyl)-phenylphosphine oxide and in which the amount of the amine-modified oligomer is less than 5% by mass, each show good results in all of the evaluation items of curability, odor, and viscosity.

In contrast, Comparative Examples, which do not satisfy the above-described conditions, does not show good results in any of curability, odor, and viscosity.

The comparison between Example 1 and Comparative Examples 1 and 2 shows that the use of a polymeric thioxanthone polymerization initiator in combination with bis(2,4,6-trimethylbenzoyl)-phenylphosphine oxide as a polymerization initiator allows the ink composition to exhibit an appropriate viscosity, have good curability and adhesion, and have less odor.

The comparison between Examples 1 to 3 and Comparative Examples 3 and 4 shows that, when the amount of the amine-modified oligomer contained in the ink composition is less than 5% by mass, the ink composition exhibits an appropriate viscosity.

The results of Examples 1, 2, and 3 show that, when the amount of the amine-modified oligomer is within a predetermined range, the curability and viscosity of the ink composition are good, and odor is reduced.

The results of Examples 1, 4, and 5 show that, when one or more kinds of monofunctional monomers having a cyclic structure are contained, the curability tends to be good.

The results of Examples 1, 6, and 7 show that, when the amount of the polymerization initiator is within a predetermined range, the curability of the ink composition is good, and odor tends to be reduced.

The results of Examples 1 and 8 show that, when a specific polymeric thioxanthone polymerization initiator is used as the polymerization initiator, the curability of the ink composition is good, and odor is reduced.

The results of Examples 1 and 9 show that, when the amount of the polymerizable compound having a glass transition temperature of 15°C or lower is within a predetermined range, the adhesion of the ink composition to the recording medium tends to be good.

The results of Examples 1, 10, 11, 12, 13, and 14 show that, even when various hydroxyl group-containing polymerizable compounds are used, the curability of the ink composition is good, and odor tends to be reduced. In addition, the ink composition exhibits an appropriate viscosity.

The results of Examples 1, 15, and 16 show that, even when various polyfunctional monomers are used, the curability of the ink composition is good, and the odor tends to be reduced.

The results of Examples 1 and 17 show that, in various combinations of a monofunctional monomer and a polyfunctional monomer, the curability of the ink composition is good, and odor tends to be reduced.

The results of Examples 1 and 18 show that, even when the hydroxyl group-containing polymerizable compound is not contained and another monofunctional monomer is used, good curability and appropriate viscosity are exhibited.

The results of Examples 1 and 19 show that, when the urethane oligomer is contained, the ink composition exhibits an appropriate viscosity.

The present disclosure is not limited to the above-described embodiment, and various modifications can be made. For example, the present disclosure includes configurations substantially the same as the configuration described in the embodiment, such as a configuration having the same function, method, and result and a configuration having the same purpose and effect. The present disclosure also includes configurations in which non-essential parts of the configurations described in the embodiment are replaced. In addition, the present disclosure includes configurations that achieve the same operational effects or configurations that can achieve the same objects as those of the configurations described in the embodiment. The present disclosure also includes configurations in which a known technology is added to the configurations described in the embodiment.

The following are derived from the above-described embodiment and modification examples.

A radiation-curable ink jet ink composition contains a polymerizable compound, a polymeric thioxanthone polymerization initiator, and bis(2,4,6-trimethylbenzoyl)-phenylphosphine oxide. The polymerizable compound contains no amine-modified oligomer, or the polymerizable compound contains an amine-modified oligomer, and an amount of the amine-modified oligomer is less than 5% by mass with respect to a total amount of the radiation-curable ink jet ink composition.

According to the radiation-curable ink jet ink composition, due to the presence of the polymeric thioxanthone polymerization initiator and bis(2,4,6-trimethylbenzoyl)-phenylphosphine oxide as the polymerization initiator, the unreacted polymerizable compound and the decomposition product of the polymerization initiator are less likely to volatize, and thus the ink composition has less odor and has good curability.

When the amine-modified oligomer is contained in a large amount, the curability is improved, but the viscosity increases. When the amine-modified oligomer is not contained or is contained in an amount of less than 5% by mass with respect to the total amount of the ink composition, the viscosity and curability are appropriate for an ink jet ink.

In the radiation-curable ink jet ink composition, the polymerizable compound may contain a polymerizable compound having a glass transition temperature of 15°C or lower.

According to the radiation-curable ink jet ink composition, due to the presence of the polymerizable compound having a glass transition temperature of 15°C or lower, the viscosity appropriate for the ink jet ink is exhibited, and the flexibility of the cured product of the ink composition and the adhesion to the recording medium are increased.

In the radiation-curable ink jet ink composition, an amount of the polymerizable compound having a glass transition temperature of 15°C or lower may be 5% by mass or more and 35% by mass or less with respect to the total amount of the radiation-curable ink jet ink composition.

According to the radiation-curable ink jet ink composition, by adjusting the amount of the polymerizable compound having a glass transition temperature of 15°C or lower, the adhesion of the ink composition to the recording medium can be further improved.

In the radiation-curable ink jet ink composition, the polymerizable compound having a glass transition temperature of 15°C or lower may contain a hydroxyl group-containing polymerizable compound.

According to the radiation-curable ink jet ink composition, due to the presence of the hydroxyl-group-containing polymerizable compound, the radiation-curable ink jet ink composition exhibits the viscosity appropriate for an ink jet ink, and a cured product of the ink composition can have high adhesion to a recording medium.

In the radiation-curable ink jet ink composition, the hydroxyl group-containing polymerizable compound may contain one or more selected from 4-hydroxybutyl acrylate, hydroxypropyl acrylate, and hydroxyethyl acrylate.

According to the radiation-curable ink jet ink composition, the radiation-curable ink jet ink composition exhibits the viscosity appropriate for an ink jet ink, and a cured product of the ink composition can have higher adhesion to a recording medium.

In the radiation-curable ink jet ink composition, the polymeric thioxanthone polymerization initiator may contain at least one selected from 1,3-di({$\alpha$-[1-chloro-9-oxo-9H-thioxanthen-4-yl)oxy]acetyl poly[oxy(1-methylethylene)]}oxy)-2,2-bis({$\alpha$-[1-chloro-9-oxo-9H-thioxanthen-4-yl)oxy]acetyl poly[oxy(1-methylethylene)]}oxymethyl)propane, and $\alpha$-[2-[(9-oxo-9H-thioxanthenyl)oxy]acetyl]-$\omega$-[2-[(9-oxo-9H-thioxanthenyl)oxy]acetyl]oxy]poly(oxy-1,4-butanediyl).

According to the radiation-curable ink jet ink composition, due to the presence of the polymeric thioxanthone polymerization initiator, the unreacted polymerizable compound and the decomposition product of the polymerization initiator are less likely to volatize, resulting in reduction of odor.

In the radiation-curable ink jet ink composition, a monomer of the polymerizable compound may have a weighted average of glass transition temperatures of 30°C or higher and 70°C or lower.

According to the radiation-curable ink jet ink composition, the viscosity and the curability can be stabilized.

In the radiation-curable ink jet ink composition, a monofunctional monomer may be contained in an amount of 50% by mass or more with respect to a total amount of the polymerizable compound.

According to the radiation-curable ink jet ink composition, the viscosity of the ink composition and the flexibility of the cured product of the ink composition can be adjusted to fall within appropriate ranges.

In the radiation-curable ink jet ink composition, the polymerizable compound may contain a polyfunctional monomer, and the polyfunctional monomer may contain one or more selected from vinyl ether group-containing (meth)acrylate and propylene glycol diacrylate.

According to the radiation-curable ink jet ink composition, the curability is good, and the abrasion resistance of the cured product of the ink composition is also improved.

In the radiation-curable ink jet ink composition, the polymerizable compound may contain one or more selected from acryloylmorpholine, tert-butylcyclohexyl acrylate, and cyclic trimethylolpropane formal acrylate.

According to the radiation-curable ink jet ink composition, the curability is good, and the abrasion resistance of the cured product of the ink composition is further improved.

In the radiation-curable ink jet ink composition, a monomer may be contained in an amount of 90% by mass or more with respect to a total amount of the polymerizable compound.

According to the radiation-curable ink jet ink composition, the viscosity of the ink ejected at the time of ink jet recording can be adjusted to fall within a range appropriate for an ink jet ink.

In the radiation-curable ink jet ink composition, a urethane oligomer may be contained in an amount of 10% by mass or less with respect to a total amount of the polymerizable compound.

According to the radiation-curable ink jet ink composition, since the viscosity of the ink composition is improved by the urethane oligomer, the composition can have a viscosity appropriate for an ink jet ink.

## Claims

1.  A radiation-curable ink jet ink composition comprising:

    a polymerizable compound;
    a polymeric thioxanthone polymerization initiator; and
    bis(2,4,6-trimethylbenzoyl)-phenylphosphine oxide, wherein
    the polymerizable compound contain no amine-modified oligomer, or
the polymerizable compound contains an amine-modified oligomer, and an amount of the amine-modified oligomer is less than 5% by mass with respect to a total amount of the radiation-curable ink jet ink composition.

2.  The radiation-curable ink jet ink composition according to claim 1, wherein the polymerizable compound contains a polymerizable compound having a glass transition temperature of 15°C or lower.

3.  The radiation-curable ink jet ink composition according to claim 2, wherein an amount of the polymerizable compound having a glass transition temperature of 15°C or lower is 5% by mass or more and 35% by mass or less with respect to the total amount of the radiation-curable ink jet ink composition.

4.  The radiation-curable ink jet ink composition according to claim 2, wherein the polymerizable compound having a glass transition temperature of 15°C or lower contains a hydroxyl group-containing polymerizable compound.

5.  The radiation-curable ink jet ink composition according to claim 4, wherein the hydroxyl group-containing polymerizable compound contains one or more selected from 4-hydroxybutyl acrylate, hydroxypropyl acrylate, and hydroxyethyl acrylate.

6.  The radiation-curable ink jet ink composition according to claim 1, wherein the polymeric thioxanthone polymerization initiator contains one or more selected from 1,3-di({α-[1-chloro-9-oxo-9H-thioxanthen-4-yl)oxy]acetyl poly[oxy(1-methylethylene)]}oxy)-2,2-bis({α-[1-chloro-9-oxo-9H-thioxanthen-4-yl)oxy] acetyl poly[oxy(1-methylethylene)]}oxymethyl)propane, and α-[2-[(9-oxo-9H-thioxanthenyl)oxy]acetyl]-ω-[2-[(9-oxo-9H-thioxanthenyl)oxy]acetyl]oxy] poly(oxy-1,4-butanediyl).

7.  The radiation-curable ink jet ink composition according to claim 1, wherein a monomer of the polymerizable compound has a weighted average of glass transition temperatures of 30°C or higher and 70°C or lower.

8.  The radiation-curable ink jet ink composition according to claim 1, wherein a monofunctional monomer is contained in an amount of 50% by mass or more with respect to a total amount of the polymerizable compound.

9.  The radiation-curable ink jet ink composition according to claim 1, wherein the polymerizable compound contains a polyfunctional monomer, and the polyfunctional monomer contains one or more selected from vinyl ether group-containing (meth) acrylate and propylene glycol diacrylate.

10. The radiation-curable ink jet ink composition according to claim 1, wherein the polymerizable compound contains one or more selected from acryloylmorpholine, tert-butylcyclohexyl acrylate, and cyclic trimethylolpropane formal acrylate.

11. The radiation-curable ink jet ink composition according to claim 1, wherein a monomer is contained in an amount of 90% by mass or more with respect to a total amount of the polymerizable compound.

12. The radiation-curable ink jet ink composition according to claim 1, wherein a urethane oligomer is contained in an amount of 10% by mass or less with respect to a total amount of the polymerizable compound.

# FIG. 1

EP 4 717 739 A1

TABLE 1:

| KIND | NAME | INFORMATION | EXAMPLES 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|
| MONOFUNCTIONAL MONOMER (WITHOUT HYDROXYL GROUP) | ACMO | Tg (°C) = 145 | 26.0 | 28.0 | 25.0 | 0.0 | 0.0 | 26.0 | 26.0 | 26.0 | 26.0 | 26.0 | 26.0 | 26.0 | 26.0 | 26.0 | 26.0 | 26.0 | 0.0 | 26.0 | 26.0 |
| | TBCHA | Tg (°C) = 77 | 0.0 | 0.0 | 0.0 | 56.0 | 0.0 | 0.0 | 0.0 | 0.0 | 0.0 | 0.0 | 0.0 | 0.0 | 0.0 | 0.0 | 0.0 | 0.0 | 26.0 | 0.0 | 0.0 |
| | CTFA | Tg (°C) = 27 | 30.0 | 30.0 | 29.0 | 0.0 | 56.0 | 30.5 | 31.0 | 30.0 | 30.0 | 30.0 | 30.0 | 30.0 | 30.0 | 30.0 | 30.0 | 30.0 | 30.0 | 43.5 | 30.0 |
| MONOFUNCTIONAL MONOMER (WITH HYDROXYL GROUP) | 4 HBA | Tg (°C) = -32 | 13.5 | 13.5 | 13.5 | 13.5 | 0.0 | 13.5 | 13.5 | 13.5 | 10.0 | 5.0 | 3.5 | 0.0 | 0.0 | 0.0 | 13.5 | 13.5 | 13.5 | 0.0 | 13.5 |
| | HPA | Tg (°C) = -7 | 0.0 | 0.0 | 0.0 | 0.0 | 0.0 | 0.0 | 0.0 | 0.0 | 0.0 | 8.5 | 0.0 | 13.5 | 0.0 | 0.0 | 0.0 | 0.0 | 0.0 | 0.0 | 0.0 |
| | HEA | Tg (°C) = -15 | 0.0 | 0.0 | 0.0 | 0.0 | 0.0 | 0.0 | 0.0 | 0.0 | 0.0 | 0.0 | 10.0 | 0.0 | 13.5 | 0.0 | 0.0 | 0.0 | 0.0 | 0.0 | 0.0 |
| | 620-100 | Tg (°C) = 14 | 0.0 | 0.0 | 0.0 | 0.0 | 13.5 | 0.0 | 0.0 | 0.0 | 0.0 | 0.0 | 0.0 | 0.0 | 0.0 | 13.5 | 0.0 | 0.0 | 0.0 | 0.0 | 0.0 |
| POLYFUNCTIONAL MONOMER | VEEA | Tg (°C) = 39 | 0.0 | 0.0 | 0.0 | 0.0 | 0.0 | 0.0 | 0.0 | 0.0 | 0.0 | 0.0 | 0.0 | 0.0 | 0.0 | 0.0 | 15.0 | 0.0 | 15.0 | 0.0 | 0.0 |
| | TPGDA | Tg (°C) = 62 | 15.0 | 15.0 | 15.0 | 15.0 | 15.0 | 15.0 | 15.0 | 15.0 | 15.0 | 15.0 | 15.0 | 15.0 | 15.0 | 15.0 | 0.0 | 0.0 | 0.0 | 15.0 | 15.0 |
| | DPGDA | Tg (°C) = 104 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 15.0 | 0.0 | 0.0 | 0.0 |
| OLIGOMER | CN371 NS | — | 2.0 | 0.0 | 4.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 0.0 |
| | CN991 NS | — | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 2.0 |
| POLYMERIZATION INHIBITOR | MEHQ | — | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | LA-7RD | — | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| POLYMERIZATION INITIATOR | 819 | MOLECULAR WEIGHT: 418 | 6.0 | 6.0 | 6.0 | 6.0 | 6.0 | 5.5 | 6.0 | 6.0 | 6.0 | 6.0 | 6.0 | 6.0 | 6.0 | 6.0 | 6.0 | 6.0 | 6.0 | 6.0 | 6.0 |
| | 7010 | MOLECULAR WEIGHT: 1839 | 3.5 | 3.5 | 3.5 | 3.5 | 3.5 | 3.5 | 2.5 | 2.5 | 3.5 | 3.5 | 3.5 | 3.5 | 3.5 | 3.5 | 3.5 | 3.5 | 3.5 | 3.5 | 3.5 |
| | TX | MOLECULAR WEIGHT: 660 | 0.0 | 0.0 | 0.0 | 0.0 | 0.0 | 0.0 | 0.0 | 1.0 | 0.0 | 0.0 | 0.0 | 0.0 | 0.0 | 0.0 | 0.0 | 0.0 | 0.0 | 0.0 | 0.0 |
| SLIP AGENT | BYK-UV3500 | — | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| DISPERSANT | Solsperse 36000 | — | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| PIGMENT | CARBON BLACK | — | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 | 3.0 |
| TOTAL | | | 100 | 100 | 100 | 100 | 100 | 100 | 100 | 100 | 100 | 100 | 100 | 100 | 100 | 100 | 100 | 100 | 100 | 100 | 100 |
| MONOFUNCTIONAL MONOMER / TOTAL AMOUNT OF INK COMPOSITION (% BY MASS) | | | 70 | 72 | 68 | 70 | 70 | 70 | 71 | 70 | 66 | 70 | 70 | 70 | 70 | 70 | 70 | 70 | 70 | 70 | 70 |
| MONOFUNCTIONAL MONOMER / TOTAL MONOMER (% BY MASS) | | | 82 | 83 | 82 | 82 | 82 | 82 | 82 | 82 | 81 | 82 | 82 | 82 | 82 | 82 | 82 | 82 | 82 | 82 | 82 |
| POLYFUNCTIONAL MONOMER / TOTAL MONOMER (% BY MASS) | | | 18 | 17 | 18 | 18 | 18 | 18 | 18 | 18 | 19 | 18 | 18 | 18 | 18 | 18 | 18 | 18 | 18 | 18 | 18 |
| MONOFUNCTIONAL MONOMER / POLYMERIZABLE COMPOUND (% BY MASS) | | | 80 | 83 | 78 | 80 | 80 | 80 | 81 | 80 | 80 | 80 | 80 | 80 | 80 | 80 | 80 | 80 | 80 | 80 | 80 |
| POLYFUNCTIONAL MONOMER / POLYMERIZABLE COMPOUND (% BY MASS) | | | 17 | 17 | 17 | 17 | 17 | 17 | 17 | 17 | 18 | 17 | 17 | 17 | 17 | 17 | 17 | 17 | 17 | 17 | 17 |
| MONOMER Tg (°C) | | | 60 | 62 | 59 | 57 | 31 | 60 | 60 | 60 | 64 | 63 | 62 | 64 | 63 | 67 | 56 | 68 | 35 | 70 | 60 |

# FIG. 2

| TABLE 2: | | | COMPARATIVE EXAMPLES | | | |
|---|---|---|---|---|---|---|
| KIND | NAME | INFORMATION | 1 | 2 | 3 | 4 |
| MONOFUNCTIONAL MONOMER (WITHOUT HYDROXYL GROUP) | ACMO | Tg (°C) = 145 | 24.5 | 24.5 | 18.0 | 13.0 |
| | TBCHA | Tg (°C) = 77 | 0.0 | 0.0 | 0.0 | 0.0 |
| | CTFA | Tg (°C) = 27 | 35.0 | 37.5 | 30.0 | 30.0 |
| MONOFUNCTIONAL MONOMER (WITH HYDROXYL GROUP) | 4 HBA | Tg (°C) = -32 | 13.5 | 13.5 | 13.5 | 13.5 |
| | HPA | Tg (°C) = -7 | 0.0 | 0.0 | 0.0 | 0.0 |
| | HEA | Tg (°C) = -15 | 0.0 | 0.0 | 0.0 | 0.0 |
| | 620-100 | Tg (°C) = 14 | 0.0 | 0.0 | 0.0 | 0.0 |
| POLYFUNCTIONAL MONOMER | VEEA | Tg (°C) = 39 | 0.0 | 0.0 | 0.0 | 0.0 |
| | TPGDA | Tg (°C) = 62 | 15.0 | 15.0 | 15.0 | 15.0 |
| | DPGDA | Tg (°C) = 104 | 0.0 | 0.0 | 0.0 | 0.0 |
| OLIGOMER | CN371 NS | – | 2.0 | 2.0 | 10.0 | 15.0 |
| | CN991 NS | – | 0.0 | 0.0 | 0.0 | 0.0 |
| POLYMERIZATION INHIBITOR | MEHQ | – | 0.2 | 0.2 | 0.2 | 0.2 |
| | LA-7RD | – | 0.1 | 0.1 | 0.1 | 0.1 |
| POLYMERIZATION INITIATOR | 819 | MOLECULAR WEIGHT: 418 | 6.0 | 0.0 | 6.0 | 6.0 |
| | 7010 | MOLECULAR WEIGHT: 1839 | 0.0 | 3.5 | 3.5 | 3.5 |
| | TX | MOLECULAR WEIGHT: 660 | 0.0 | 0.0 | 0.0 | 0.0 |
| SLIP AGENT | BYK-UV3500 | – | 0.5 | 0.5 | 0.5 | 0.5 |
| DISPERSANT | Solsperse 36000 | – | 0.2 | 0.2 | 0.2 | 0.2 |
| PIGMENT | CARBON BLACK | – | 3.0 | 3.0 | 3.0 | 3.0 |
| TOTAL | | | 100 | 100 | 100 | 100 |

| | 1 | 2 | 3 | 4 |
|---|---|---|---|---|
| MONOFUNCTIONAL MONOMER / TOTAL AMOUNT OF INK COMPOSITION (% BY MASS) | 73 | 76 | 62 | 57 |
| MONOFUNCTIONAL MONOMER / TOTAL MONOMER (% BY MASS) | 83 | 83 | 80 | 79 |
| POLYFUNCTIONAL MONOMER / TOTAL MONOMER (% BY MASS) | 17 | 17 | 20 | 21 |
| MONOFUNCTIONAL MONOMER / POLYMERIZABLE COMPOUND (% BY MASS) | 81 | 82 | 71 | 65 |
| POLYFUNCTIONAL MONOMER / POLYMERIZABLE COMPOUND (% BY MASS) | 17 | 16 | 17 | 17 |
| MONOMER Tg (°C) | 57 | 56 | 51 | 45 |

# FIG. 3

| TABLE 3: | | EXAMPLES | | | | | | | | | | | | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 |
| UV-LED IRRADIATION CONDITION | PEAK WAVELENGTH (nm) | 395 | 395 | 395 | 395 | 395 | 395 | 395 | 395 | 395 | 395 | 395 | 395 | 395 | 395 | 395 | 395 | 395 | 395 | 395 |
| | IRRADIATION WAVELENGTH (mW/cm$^2$) | 1000 | 1000 | 1000 | 1000 | 1000 | 1000 | 1000 | 1000 | 1000 | 1000 | 1000 | 1000 | 1000 | 1000 | 1000 | 1000 | 1000 | 1000 | 1000 |
| EVALUATION RESULTS | CURABILITY | A | B | A | A | B | B | B | A | A | A | A | A | A | A | A | A | A | A | B |
| | ODOR | A | A | A | A | A | A | A | A | A | A | A | A | A | A | A | A | A | A | A |
| | ADHESION | A | A | A | A | A | A | A | A | B | B | B | B | B | A | A | A | A | D | A |
| | VISCOSITY | A | B | B | B | A | A | A | B | A | B | B | A | B | B | B | B | B | A | A |

EP 4 717 739 A1

# FIG. 4

TABLE 4:

|  |  | COMPARATIVE EXAMPLES | | | |
|---|---|---|---|---|---|
|  |  | 1 | 2 | 3 | 4 |
| UV-LED IRRADIATION CONDITION | PEAK WAVELENGTH (nm) | 395 | 395 | 395 | 395 |
|  | IRRADIATION WAVELENGTH (mW/cm²) | 1000 | 1000 | 1000 | 1000 |
| EVALUATION RESULTS | CURABILITY | D | D | A | A |
|  | ODOR | C | C | A | A |
|  | ADHESION | A | C | A | A |
|  | VISCOSITY | A | A | C | D |

Europäisches
Patentamt
European
Patent Office
Office européen
des brevets

# EUROPEAN SEARCH REPORT

**Application Number**

EP 25 20 5092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/161887 A1 (FUJIFILM CORP [JP]) 8 August 2024 (2024-08-08) * examples; tables * ----- | 1-12 | INV. C09D11/101 C09D11/322 C09D11/38 |
| X | WO 2024/122204 A1 (FUJIFILM CORP [JP]) 13 June 2024 (2024-06-13) * examples; tables * ----- | 1-12 | |
| X | WO 2021/152309 A1 (FUJIFILM SPECIALITY INK SYSTEMS LTD [GB]) 5 August 2021 (2021-08-05) * claims; examples * ----- | 1-12 | |
| X | WO 2022/090718 A1 (FUJIFILM SPECIALITY INK SYSTEMS LTD [GB]) 5 May 2022 (2022-05-05) * claims; examples * ----- | 1-12 | |
| X | WO 2023/105206 A1 (FUJIFILM SPECIALITY INK SYSTEMS LTD [GB]) 15 June 2023 (2023-06-15) * claims; examples * ----- | 1-12 | |
| X,P | EP 4 613 824 A1 (SEIKO EPSON CORP [JP]) 10 September 2025 (2025-09-10) * claims; examples * ----- | 1-12 | **TECHNICAL FIELDS SEARCHED (IPC)** C09D |

The present search report has been drawn up for all claims

| Place of search | Date of completion of the search | Examiner |
|---|---|---|
| Munich | 12 February 2026 | Schmitz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 5092

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | | Publication date | Patent family member(s) | | | Publication date |
|---|---|---|---|---|---|---|---|
| WO 2024161887 | A1 | | 08-08-2024 | CN | 120603909 | A | 05-09-2025 |
| | | | | EP | 4660262 | A1 | 10-12-2025 |
| | | | | JP | WO2024161887 | A1 | 08-08-2024 |
| | | | | US | 2025340747 | A1 | 06-11-2025 |
| | | | | WO | 2024161887 | A1 | 08-08-2024 |
| WO 2024122204 | A1 | | 13-06-2024 | CN | 120344624 | A | 18-07-2025 |
| | | | | EP | 4632021 | A1 | 15-10-2025 |
| | | | | JP | WO2024122204 | A1 | 13-06-2024 |
| | | | | US | 2025289971 | A1 | 18-09-2025 |
| | | | | WO | 2024122204 | A1 | 13-06-2024 |
| WO 2021152309 | A1 | | 05-08-2021 | EP | 4097185 | A1 | 07-12-2022 |
| | | | | US | 2023094929 | A1 | 30-03-2023 |
| | | | | WO | 2021152309 | A1 | 05-08-2021 |
| WO 2022090718 | A1 | | 05-05-2022 | GB | 2615930 | A | 23-08-2023 |
| | | | | WO | 2022090718 | A1 | 05-05-2022 |
| WO 2023105206 | A1 | | 15-06-2023 | GB | 2627700 | A | 28-08-2024 |
| | | | | WO | 2023105206 | A1 | 15-06-2023 |
| EP 4613824 | A1 | | 10-09-2025 | CN | 120607833 | A | 09-09-2025 |
| | | | | EP | 4613824 | A1 | 10-09-2025 |
| | | | | JP | 2025135980 | A | 19-09-2025 |
| | | | | US | 2025282969 | A1 | 11-09-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024169116 A

- JP 2024033318 A

**Non-patent literature cited in the description**

- *CHEMICAL ABSTRACTS*, 813452-37-8

- *CHEMICAL ABSTRACTS*, 2516-92-9